Europäisches Patentamt

European Patent Office

Office européen des brevets

(19)

(11) Numéro de publication: **0 066 033**

**A1**

(12)

# DEMANDE DE BREVET EUROPEEN

(21) Numéro de dépôt: **81810212.1**

(22) Date de dépôt: **01.06.81**

(51) Int. Cl.³: **F 16 L 19/06**
F 16 L 13/00, F 16 L 47/04

(43) Date de publication de la demande:
**08.12.82** Bulletin **82/49**

(84) Etats contractants désignés:
**AT BE CH DE FR GB IT LI LU NL SE**

(71) Demandeur: **PABRECO S.A.**
**2, Rte Mgr. Besson**
**CH-1700 Fribourg(CH)**

(72) Inventeur: **Mattes, Rolf**
**8, Rte Mgr. Besson**
**CH-1700 Fribourg(CH)**

(74) Mandataire: **Moinas, Michel**
**c/o Moinas & Cie Case Postale 88 5, rue Saint-Léger**
**CH-1211 Genève 4(CH)**

(54) Raccord pour tuyau.

(57) Ce raccord comprend une pièce réceptrice (1) pourvue d'autant d'évidements (2) qu'il y a de tuyaux à raccorder et des bagues (11) en nombre correspondant.

Les évidements (2) sont coniques et se prolongent d'une partie (3) dont le fond sert de butée (4), de préférence oblique pour le tuyau. La partie conique (2) porte des bossages en dents de scie (5).

Les bagues (11) ont un prolongement annulaire (12), intérieurement droit, extérieurement en forme de cône dont la surface porte également des bossages en dents de scie (13).

Elles viennent s'insérer dans les évidements (2) contre les tuyaux, les dents de scie (5, 13) s'opposant à leur retrait, ainsi qu'à celui des tuyaux.

Application au raccordement des tuyaux en plastique, notamment armés, et en général pour le transport basse pression (moins de 5 bars) à des températures supérieures à 80°C par exemple.

Ils sont résistants à la corrosion et absorbent bien les bruits et les chocs.

Fig. 2

RACCORD POUR TUYAU

L'invention a trait à un raccord pour tuyau, notamment pour tuyau en matière plastique armé ou non, et trouve un intérêt particulier pour le raccordement des tuyaux d'évacuation des eaux usées et des tuyaux d'égouts.

Les raccords pour tuyaux en matière plastique comprennent généralement plusieurs parties. Le montage correct des différentes pièces est essentiel à l'obtention d'un assemblage étanche, ce qui dans certains cas peut présenter des difficultés pour les non-spécialistes.

L'invention se propose de fournir un raccord pour tuyau comprenant d'une part une pièce réceptrice de l'extrémité des tuyaux à raccorder et d'autre part des bagues, dont le montage soit facile et sans erreur possible, de sorte qu'aucune connaissance spécialisée ne soit requise.

Dans ce raccord, la pièce réceptrice des extrémités de tuyau est pourvue d'autant d'évidements qu'il y a de tuyaux à raccorder, les bagues étant en nombre correspondant. Ces évidements sont des évidements coniques annulaires prolongés d'une partie droite dont le fond sert de butée au tuyau; ils comportent sur leur partie conique des bossages en dents de scie. Les bagues comportent, elles, dans l'axe des tuyaux, un prolongement annulaire, intérieurement droit, extérieurement en forme de cône dont la surface porte des bossages en dents de scie. Ces bagues viennent s'insérer dans les évidements coniques contre les tuyaux, les dents de scie s'opposant au retrait à la fois des tuyaux et des bagues.

De préférence, les fonds des évidements servant de butée aux tuyaux sont obliques, par rapport au plan de symétrie de la pièce réceptrice, l'inclinaison étant dirigée de façon à repousser le tuyau vers l'extérieur.

La pièce réceptrice peut etre en matière plastique, par exemple en polyamide, polyimide, polyéthylène, polypropylène, polystyrène, etc. A l'extérieur, elle peut être recouverte d'une couche de protection métallique.

La pièce réceptrice peut également être métallique, en alluminium, fer ou leurs alliages par exemple. La partie centrale servant de butée aux tuyaux est alors de préférence recouverte d'une couche en matière plastique, telles que celles citées précédemment.

Le raccordement s'effectue très simplement en enfilant les tuyaux à raccorder dans la pièce réceptrice, jusqu'en butée, puis en enfilant une bague pour chaque tuyau. Ces bagues sont rentrées par vissage ou, plus simplement, par frappe au marteau. Celles-ci s'ancrent de façon irréversible grâce aux dents de scie garnissant l'évidement de la pièce réceptrice et à ses propres dents de scie qui viennent mordre sur le tuyau.

L'invention est illustrée par le dessin annexé, donné à titre d'exemple.

La figure 1 est une vue en coupe de la pièce réceptrice des extrémités de tuyau. La partie droite est représentée montée.

La figure 2 est une vue en coupe du raccord monté, dans une première forme d'exécution. C'est une reprise de la droite de la figure 1.

La figure 3 est une vue en coupe du raccord monté, dans une autre forme d'exécution.

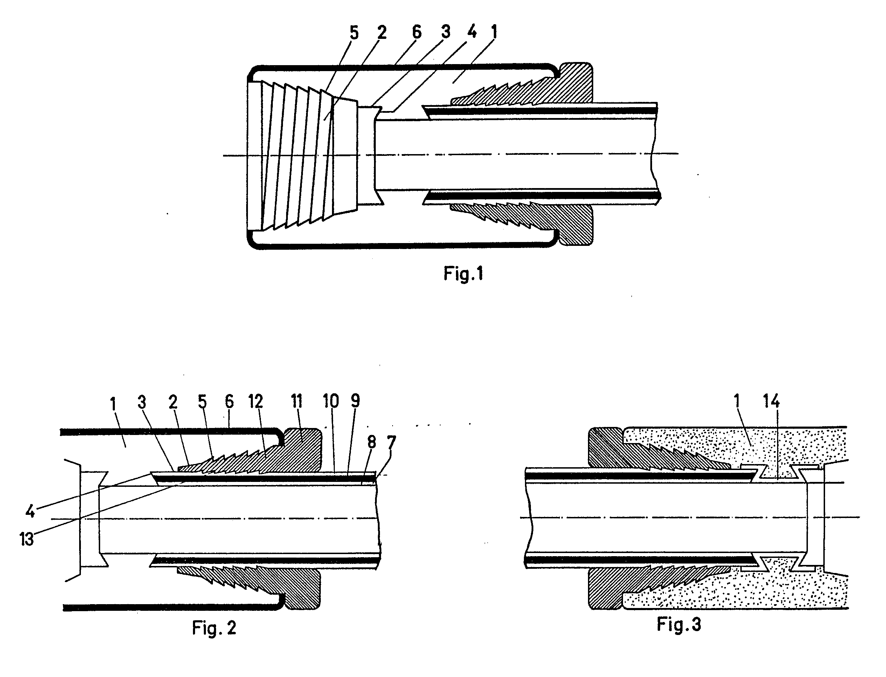

Dans la figure 1, on voit la pièce réceptrice 1 pourvue de son évidement conique annulaire 2. Cet évidement 2 est prolongé d'une partie droite 3 servant de butée 4 au tuyau. Cette butée 4 est oblique et tend à repousser le tuyau vers l'extérieur. La partie conique 2 comporte des dents de scie 5. La pièce réceptrice 1 est en matière plastique et comporte un revêtement métallique extérieur 6.

Dans la figure 2, on a représenté un tuyau 7 renforcé, c'est-à-dire comprenant un tube interne 8 en matière plastique, un tube métallique 9 et un tube externe en matière plastique 10, enfilé jusqu'en butée 4. La pièce réceptrice 1 est représentée avec son évidement conique 2 pourvu des dents de scie 5 et avec sa partie droite 3. Elle est en matière plastique et recouverte d'une protection métallique 6. La bague 11, avec son prolongement conique 12 et sa face intérieure pourvue de dents de scie 13, a été enfilée dans l'évidement conique 2.

Comme représentées sur la figure 1, les dents de scie 5 garnissant la face intérieure de l'évidement conique 2 ont une géométrie hélicoïdale. De la sorte, elles peuvent jouer le rôle d'un pas de vis, ce qui permet d'entrer la bague 11 en la tournant.

Cette bague peut être également entrée à force, par des coups de marteau . Si les dents de scie 2 ne présentent pas de géométrie hélicoïdale, alors la bague 11 est entrée au marteau.

La figure 3 diffère de la figure 2 en ce que la pièce réceptrice 1 est métallique. Il n'y a donc pas de revêtement protecteur à l'extérieur. En revanche, la partie centrale de cette pièce 1, soit celle qui est en contact avec l'extrémité des tuyaux, fait butée et, entre les butées, est recouverte d'une couche 14 en matière plastique. Cette matière plastique peut être une de celles citées précédemment.

On voit très bien sur les figures 2 et 3 que la bague 11 est ancrée dans la pièce réceptrice 1 par les dents de

- 4 - 0066033

scie 5 et qu'à son tour elle bloque les tuyaux 7 par ses dents de scie 13. De la sorte, ni le tuyau 7, ni la bague 11 ne peuvent être sortis, sauf à exercer une force d'arrachement considérable.

Ces raccords présentent un grand intérêt pour assembler des tuyaux en matière plastique, notamment en matière plastique armée. Toutes les parties en contact avec le fluide véhiculé dans les tuyaux sont en matière plastique et les raccords peuvent donc être utilisés pour des conduites de liquides corrosifs, dans l'industrie chimique par exemple.

Vu leur facilité de montage, la simplicité de conception et la nature des matériaux employés, ces raccords s'avèrent particulièrement bon marché. On les recommandera donc pour les tuyauteries d'évacuation des eaux usées et les égouts, et en général pour le transport basse pression (moins de 5 bars) à des températures supérieures à 80° C par exemple.

Ils sont résistants à la corrosion et absorbent bien les bruits et les chocs.

REVENDICATIONS

1. Raccord pour tuyau comprenant une pièce réceptrice (1) des extrémités de tuyau pourvue d'autant d'évidements (2) qu'il y a de tuyaux à raccorder et d'autant de bagues (11) correspondantes, caractérisé par le fait

1) que les évidements (2) ont des évidements coniques annulaires prolongés d'une partie droite (3) dont le fond sert de butée (4) au tuyau, et comportent sur leur partie conique (2) des bossages en dents de scie (5), et

2) que les bagues (11) comportent, dans l'axe du tuyau, un prolongement annulaire (12), intérieurement droit, extérieurement en forme de cône dont la surface porte des bossages en dents de scie (13),

ces bagues venant s'insérer dans les évidements coniques (2) contre les tuyaux et les dents de scie (5, 13) s'opposant au retrait à la fois des tuyaux et des bagues.

2. Raccord selon la revendication 1, caractérisé par le fait que la butée (4) est oblique, son inclinaison tendant à repousser le tuyau vers l'extérieur.

3. Raccord selon la revendication 1, caractérisé par le fait que la pièce réceptrice (1) est en matière plastique.

4. Raccord selon la revendication 3, caractérisé par le fait que la pièce réceptrice (1) comporte un revêtement métallique extérieur (6).

5. Raccord selon la revendication 1, caractérisé par le fait que la pièce réceptrice (1) est métallique et comporte, dans sa partie centrale, un revêtement (14) en matière plastique.

6. Raccord selon la revendication 1, caractérisé par le fait que les bossages en dents de scie (5, 13), ont une géométrie droite.

7. Raccord selon la revendication 1, caractérisé par le fait que les bossages en dents de scie (5, 13) ont une géométrie hélicoidale.

8. Utilisation du raccord selon la revendication 1 pour les tuyaux en matière plastique.

9. Utilisation selon la revendication 8, caractérisé par le fait que les tuyaux sont en matière plastique armée d'un tube métallique (9).

10. Utilisation selon la revendication 8, caractérisé par le fait que les tuyaux sont des tuyaux d'évacuation d'eaux usées ou des tuyaux d'égouts

Fig. 2

Fig.1

Fig.3

Office européen
des brevets

**RAPPORT DE RECHERCHE EUROPEENNE**

EP 81 81 0212

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| Y<br>A | US - A - 1 9,12 074 (GIBBONS)<br><br>* figures *<br><br>-- | 1,7,8<br>6 | F 16 L 19/06<br>13/00<br>47/04 |
| Y | US - A - 883 512 (RUIZ ARANDA)<br><br>* figures *<br><br>-- | 1,7,8 | |
| A | US - A - 1 507 138 (PIERCE)<br><br>* figures *<br><br>-- | 2 | **DOMAINES TECHNIQUES RECHERCHES (Int. Cl. 3)**<br><br>F 16 L |
| A | US - A - 4 036 513 (LOFTUS)<br><br>* colonne 1, ligne 65 à colonne 2, ligne 31; figure 2 *<br><br>-- | 3,4 | |
| A | FR - A - 2 189 675 (DRORI)<br><br>* figures * | 1 | |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 1-02-1982 | HUBEAU |

OEB Form 1503.1   06.78